# FASCICULE DE BREVET EUROPEEN

(11) **EP 1 798 425 B1**
(45) Date de publication et mention de la délivrance du brevet: **12.11.2008**
(21) Numéro de dépôt: 05292672.2
(22) Date de dépôt: 14.12.2005
(51) Int. Cl.: F16B 13/00, F16B 33/02, E02D 5/56

(54) **Goujon d'assemblage de micropieux et micropieux comprenant de tels goujons**
Verbindungsdübel für Mikropfähle und Mikropfähle mit einem solchen Dübel
Connecting stake for micropiles and micropile comprising such stakes

(43) Date de publication de la demande: 20.06.2007
(73) Titulaire: Jean-Marie Renovation, 80420 Fixecourt (FR)
(72) Inventeur: Denis, Jean-Marie, 80420 Flixecourt (FR)
(74) Mandataire: Louiset, Raphael

(56) Documents cités:
- EP-B- 0 954 645
- GB-A- 2 262 560
- US-A- 3 764 278

## Description

La présente invention se rapporte au domaine technique des pieux de fondation.

Le terme « fondation » désigne l'ensemble des ouvrages enterrés qui composent le socle et l'assise stable d'une construction et répartissent les charges de cette construction sur le sol naturel ou reportent ces charges sur le sol naturel ou reportent ces charges sur le sol dur d'assise.

En fonction du rapport H/B où B est la largeur de la fondation et H la profondeur d'assise, on distingue les fondations spéciales, pour lesquelles H/B est inférieur à six, par exemple pour les semelles et les radiers, et les fondations profondes, pour lesquelles H/B est supérieur à six, par exemple pour les barrettes, les puits et les pieux.

Les pieux peuvent être classés suivant quatre critères :
- nature du matériau constitutif (bois, alliage métallique, béton notamment);
- mode d'introduction dans le sol (battage, forage, fonçage, vibro-fonçage par exemple) ;
- mode de transmission de charge (pieu colonne ne transmettant les charges que par effet de pointe, pieu flottant ne transmettant les charges que par frottement latéral) ;
- taille des pieux : selon le DTU, un micropieu présente un diamètre inférieur à 250 mm.

Les pieux battus sont le plus souvent en acier (profil H à âme renforcée ou palpieu) ou bien en béton préfabriqué et sont mis en place par battage avec refoulement du sol.

En variante, le pieu battu est de type :
- battu enrobé : le pieu est un tube métallique muni d'un sabot débordant, un mortier injecté par l'intérieur du tube, pendant le battage, venant enrober le pieu en remplissant le vide créé par le débord du sabot ;
- à tube battu : le pieu est réalisé à l'aide d'un tube métallique muni d'un bouchon en béton, battu dans le sol, puis rempli de béton ferme pilonné (pieu battu pilonné) ou de béton liquide (pieu battu moulé).

Les pieux foncés peuvent être en béton armé, préfabriqué, ou coffré à l'avancement, ou bien encore en acier (profil H à âme renforcée ou palpieu) et sont mis en place avec refoulement du sol.

Les pieux forés sont réalisés en béton armé coulé en place dans un forage.

Lorsque la cohésion du terrain le permet, le forage est effectué sans protection (pieu foré simple).

Dans les autres cas, un tube métallique protège le forage (pieu foré tubé) ou une boue de forage est injectée (pieu foré à la boue).

Le forage est réalisé par tarière ou roto percussion.

En variante, le pieu foré est de type :
- moulé foré : le pieu en béton armé est coulé en place dans un forage réalisé à l'aide d'un outil travaillant par rotation ;
- foré vissé moulé : le pieu est réalisé à l'aide d'un outil à vis, enfoncé par rotation, muni d'un bouchon en fonte qui est perdu et d'un tube permettant le bétonnage au fur et à mesure que l'on retire l'outil.

Les pieux battus ou forés peuvent être de type injecté haute pression, un système d'injection composé de tubes à manchettes permettant l'injection d'un coulis de scellement dans le sol.

On connaît également, dans l'art antérieur :
- des pieux moulés tubés : pieux en béton armé coulés en place dans un tube coffrant foncé dans le sol ;
- des pieux à vis : pieux préfabriqués munis d'un sabot fileté et enfoncés par rotation.

L'invention concerne plus particulièrement les micropieux.

Les micropieux sont employés pour la reprise en sous oeuvre, le renforcement des sols (stabilité des pentes ou talus et protection des ouvrages souterrains lors des travaux d'excavation), et les fondations neuves.

La technique des micropieux a été développée en 1952 par l'entreprise Fondelile sous la direction de l'ingénieur italien Lizzi.

Ces premiers pieux étaient forés et scellés au terrain par un mortier.

Ces produits ont été utilisés en Italie sous le nom de « pieux racines ».

En anglais, les micropieux sont dénommés minipiles, micropiles, root piles, needle piles.

Ils sont dénommés mikropfahl, verpresspfahle, wurzelphale en allemand.

Les tableaux ci-dessous correspondent au classement des micropieux les plus courants selon le projet de norme européenne CEN TC 288, de 2002.

Selon ce projet de norme européenne, un micropieu est un pieu ayant un diamètre inférieur à 300 mm pour les pieux mis en place sans refoulement du sol (pieux forés ou moulés en place), et inférieur à 150 mm pour les pieux mis en place avec refoulement du sol (pieux foncés, lancés ou battus).

Le premier tableau concerne les micropieux forés. Le second tableau concerne les micropieux foncés.

| Méthode de forage | Type d'armature | Méthode d'injection | Type de coulis | Options |
|---|---|---|---|---|
| Forage rotatif | Cage d'armature | Injection gravitaire, bétonnage | Coulis, mortier ou béton | Tubage |
| Forage en roto percussion | | Injection en une seule passe avec un tubage temporaire | Coulis ou béton | |
| Benne preneuse | Elément porteur | Injection gravitaire | Coulis ou mortier | |
| Trépan ou soupape | | Injection en une seule passe avec un tubage temporaire, un élément porteur, ou un tube à manchettes | Coulis ou mortier | |
| | | Injection en plusieurs passes avec un tube à manchettes | Coulis | |
| | Tubage permanent (avec ou sans cage d'armature) | Injection gravitaire ou bétonnage | Coulis, mortier ou béton | Base élargie |
| Forage à la tarière creuse continue | Cage d'armature | Bétonnage par la tige creuse de la tarière | Coulis, mortier ou béton | |

| Type/Méthode | Matériaux/ Tubage | Section/Armature du micropieu | Option/Injection | |
|---|---|---|---|---|
| Préfabriqué | Béton armé acier ou fonte | Pleine ou tube ouvert, profilés | Injection autour du fût | |
| | | Tube Fermé | Remplissage avec du coulis, du mortier ou du béton avec ou sans injection autour du fût | |
| Moulé en place | Tubage temporaire | Cage d'armature | Injection gravitaire, bétonnage Injection en une seule passe avec un tubage | |
| | | Elément porteur | Injection gravitaire, bétonnage Injection en une seule passe avec un tubage Injection en une seule passe avec un tubage à manchettes Injection en plusieurs passes avec un tubage à manchettes | |
| | Tubage permanent | Cage d'armature | Bétonnage à sec, avec ou sans élargissement de la base | |

L'invention concerne plus particulièrement les micropieux de fondation.

On désigne conventionnellement par les termes micropieux ou pieu-racine, des pieux de section modeste, typiquement de diamètre inférieur à 250 mm, mis en place avec des outillages de dimensions réduites, légers et maniables, en particulier pour la reprise en sous oeuvre.

Du fait de leur faible diamètre, les micropieux ne travaillent pas en pointe, leur portance dépendant essentiellement du frottement latéral.

Les micropieux conventionnels sont de quatre types différents (DTU 13-2, 1978, modifiée par additif de 1991 et reprise dans le Fascicule 62-Titre V du LCPC, datant de 1993):
- type I : pieu foré tubé de diamètre inférieur à 250 mm. Le forage est équipé ou non d'armatures et rempli d'un mortier de ciment au moyen d'un tube plongeur. Le tubage est récupéré en l'obturant en tête et en le mettant sous pression au dessus du mortier. Les pieux racines de la société Fondelile étaient de cette catégorie ;
- type II : pieu foré, de diamètre inférieur à 250 mm, avec injection gravitaire sans pression. Le forage est équipé d'une armature et rempli d'un coulis ou de mortier de scellement, par gravité ou sous une très faible pression, au moyen d'un tube plongeur. Lorsque la nature du sol le permet, le forage peut être remplacé par le lançage, le battage ou le fonçage ;
- type III: pieu foré, de diamètre inférieur à 250 mm, avec injection globale unitaire sous pression IGU. Le forage est équipé d'armatures et d'un système d'injection qui est un tube à manchettes mis en place dans un coulis de gaine. Si l'armature est un tube métallique, ce tube peut être équipé de manchettes et tenir lieu de système d'injection. Cette injection est réalisée en tête, de manière globale et unitaire, à une pression supérieure ou égale à 1 MPa. Lorsque la nature du sol le permet, le forage peut être remplacé par le lançage, le battage ou le fonçage ;
- type IV: pieu foré, de diamètre inférieur à 250 mm, avec injection répétitive et sélective sous pression IRS. Le forage est équipé d'armatures et d'un système d'injection qui est un tube à manchettes mis en place dans un coulis de gaine. Si l'armature est un tube métallique, ce tube peut être équipé de manchettes et tenir lieu de système d'injection. Cette injection est réalisée à l'obturateur simple ou double d'un coulis ou mortier de scellement à une pression d'injection supérieure ou égale à 1 MPa.

Les micropieux sont utilisés pour :
- stabiliser les fondations existantes qui tassent, par exemple sur des pavillons individuels après sécheresse des sols, inondations ou malfaçons ;
- renforcer ces fondations existantes qui doivent reprendre des charges supplémentaires ;
- supporter des charges de structure sur des sites où les accès sont exigus (réhabilitation) ;
- réaliser des fondations dans des terrains durs, traverser d'anciennes maçonneries sans trépanage ni vibrations excessives entraînant des endommagements pour les ouvrages existants.

Les micropieux sont conventionnellement liaisonnés à l'ouvrage soit par scellement au mortier antiretrait, dans les fondations existantes, soit par une platine de répartition encastrée dans un chevêtre en béton armé.

Les micropieux forés sont assez couramment utilisés pour les reprises en sous-oeuvre dans un espace réduit, dans le cas d'habitats individuels notamment.

Les micropieux sont également employés en groupe (ensemble de micropieux verticaux) ou en réseaux (ensemble de micropieux verticaux et inclinés) pour le renforcement des sols.

Le document EP 0 954 645 B1 , au nom de Target Fixings, décrit un pieu comportant une pluralité d'ailettes externes hélicoïdales, pratiquement le long de la totalité de la longueur du pieu, ce pieu ayant un diamètre extérieur d'au moins 25 mm, au moins une des ailettes ayant une section transversale cunéiforme. Après réalisation d'un pré-trou, le pieu est mis en place par battage au marteau hydraulique ou pneumatique, les ailettes du pieu provoquant sa rotation dans le sol, lors du battage. Aucune injection de liant n'est effectuée ou possible lors de la mise en place du pieu décrit dans le document EP 0 954 645 B1, ce pieu étant massif, par exemple moulé, ou bien encore creux mais fermé et rempli d'un matériau tel que résine, ou matériau polymère, avant mise en place dans le sol.

La demanderesse a développé des micropieux à âme centrale, injectable ou non, ayant constaté que les pieux décrits dans le document EP 0 954 645 B1 ne permettaient pas d'atteindre des résistances à l'arrachement nécessaires dans certaines applications.

La réalisation de micropieu à âme axiale massive confère au pieu une résistance élevée au flambement, contrairement par exemple au pieu décrit dans le document US-2,332,990 A1 de 1943.

Les micropieux de la demanderesse sont mis en place par enfoncement d'éléments d'environ un mètre de longueur, ces éléments étant en fonte d'aluminium.

L'assemblage des éléments est effectué à l'aide d'un goujon en acier inoxydable.

La géométrie des micropieux de la demanderesse est telle qu'ils se vissent d'eux-mêmes dans le sol, sous l'effet d'un marteau, sans vibration, et ce en comprimant le sol environnant.

La demanderesse a toutefois constaté que les éléments de micropieux peuvent ne pas être correctement disposés les uns par rapport aux autres.

La demanderesse a constaté que ce problème était présent dans d'autres micropieux, conventionnels, assemblés par goujons.

Le serrage manuel au montage des éléments de micropieux est suivi d'un serrage incontrôlé lors de l'enfoncement des micropieux, du fait de la frappe et des vibrations. L'élément supérieur peut se comporter comme une clé à choc et le serrage se poursuit, de sorte que les arêtes hélicoïdales des éléments de micropieux ne sont pas placées en continuité.

L'invention vise à pallier ce problème.

A cette fin, l'invention se rapporte, selon un premier aspect, à un goujon fileté d'assemblage de micropieux, comprenant plusieurs filets adjacents à hélice droite ou gauche, dont le pas est supérieur ou égal à 300.

Ce goujon présente, selon diverses réalisations, les caractères suivants, le cas échéant combinés :
- il comprend trois filets trapézoïdaux symétriques ;
- son diamètre est inférieur à 30 mm, et vaut notamment 16 et 24 mm, le pas étant de 300, 600, 900 ou 1200 ;
- il est réalisé en acier inoxydable, notamment acier austénitique 1.4404;
- il est pourvu d'un revêtement anticorrosion, notamment peinture époxy appliquée à chaud ;
- il est pourvu en outre d'un revêtement facilitant le glissement contre les filets, notamment film de polytétrafluoréthylène.

L'invention se rapporte, selon un deuxième aspect, à un ensemble formé par un goujon tel que présenté ci-dessus, et deux tronçons de micropieu comprenant chacun au moins une ailette, les tronçons de micropieu comprenant chacun un taraudage axial débouchant au droit d'une surface transversale d'appui, la somme des longueurs de percement de ces taraudages étant supérieure à la longueur du goujon.

Avantageusement, les taraudages axiaux des deux tronçons sont sensiblement identiques.

Avantageusement, le percement des taraudages est de 76.5 mm, les taraudages s'étendant sur 64.5 mm, la longueur totale du goujon étant de 144 mm, la longueur du filetage sur le goujon étant de 120 mm, le goujon saillant ainsi par rapport au plan transversal d'appui d'un des tronçons sur une longueur de 55.5 mm de filets lorsqu'il est vissé à fond dans le taraudage de ce tronçon.

L'invention se rapporte, selon un troisième aspect, à un micropieu comprenant au moins un ensemble tel que présenté ci-dessus, les tronçons de ce micropieu étant réalisés en fonte d'aluminium.

D'autres objets et avantages de l'invention apparaîtront au cours de la description suivante de modes de réalisation actuellement préférés, description qui va être effectuée en se référant aux dessins annexés dans lesquels :
- la figure 1 est une vue de côté d'un goujon fileté mis en place dans un élément de micropieu, selon un mode de réalisation de l'invention ;

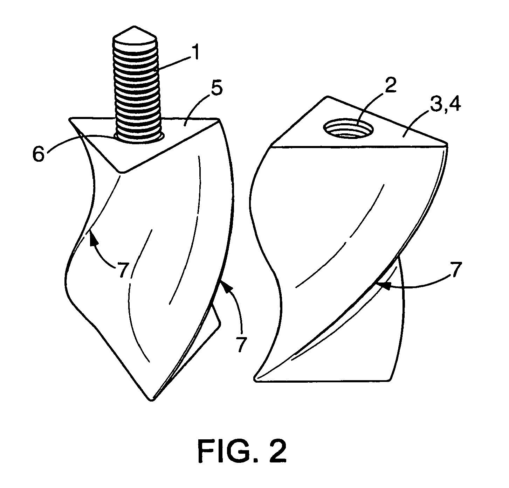

- la figure 2 est une vue en perspective de deux segments de micropieux hélicoïdaux aptes à être assemblés l'un à l'autre par un goujon fileté tel que représenté en figure 1.

Les dimensions qui vont être précisées ci-dessous ne doivent pas être vues comme limitatives de l'invention, mais comme une illustration de modes de réalisation actuellement préférés de l'invention.

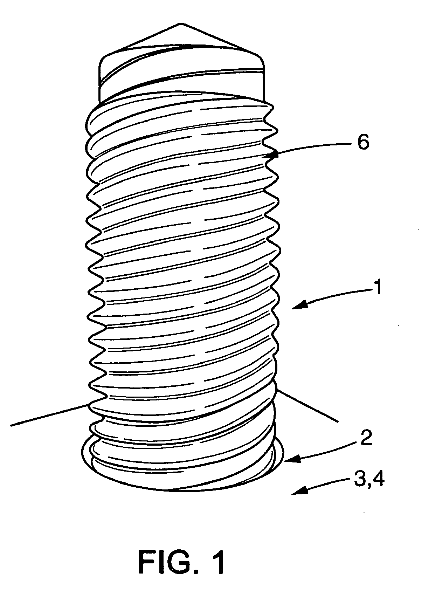

Le goujon 1 représenté en figure 1 est vissé manuellement dans un taraudage 2 axial d'un tronçon 3 de micropieu.

Avantageusement, pour un micropieu formé par assemblage de tronçons 3 à l'aide de goujons 1, tous les goujons 1 sont sensiblement identiques et sont vissés dans des taraudages identiques.

A titre d'exemple, le percement est de 76.5 mm, le taraudage étant de 64.5 mm, la longueur totale du goujon étant de 144 mm, la longueur du filetage sur le goujon étant de 120 mm. Lorsque le goujon est vissé manuellement à fond de filet, il saille ainsi une longueur de 55.5 mm de filets, la tolérance étant de plus ou moins 1 mm.

Avantageusement, le pas du filetage est fin et de 1200, de sorte que lorsqu'un tronçon effectue un tour de filet sur le goujon d'assemblage, les deux faces d'appui transversales 4, 5 des tronçons s'écartent ou se rapprochent l'une de l'autre de 12 mm.

Dans d'autres modes de réalisation, le pas du filetage est de 300, 600, ou 900.

Par « pas » on désigne ici la distance mesurée dans un plan contenant l'axe de la pièce filetée, entre deux points homologues de deux profils successifs d'un même filet.

Dans le mode de réalisation représenté en figure 1, le pas de l'hélice est à droite. Ce pas d'hélice sera choisi de telle sorte que le vissage dans le sol des micropieux, lors de leur enfoncement, conduise à un serrage des tronçons de micropieux.

Avantageusement, les filets 6 sont au nombre de trois.

Dans le mode de réalisation de la figure 1, trois filets trapézoïdaux sont employés. L'amorçage du goujon dans le taraudage s'effectue toujours par les trois filets en même temps. A titre indicatif, le diamètre des goujons 1 est par exemple de 16 mm ou 24 mm.

Avec les dimensions indiquées auparavant, lors du serrage manuel des tronçons de micropieux, il est possible de placer les ailettes hélicoïdales 7 des tronçons de mircopieux sensiblement à 12° les unes des autres. Lors de l'enfoncement du micropieu, par auto serrage, les ailettes se rapprochent d'un alignement parfait.

Les tronçons de micropieux étant en fonte d'aluminium, les goujons sont avantageusement en acier inoxydable, par exemple de type 1.4404 (acier austénitique AISI 316L).

Pour éviter la corrosion et le couplage galvanique, un revêtement protecteur est appliqué sur les goujons. Dans une réalisation, ce revêtement est une peinture époxy appliquée à chaud. Dans une réalisation avantageuse, un film de Téflon ® est appliqué, par exemple par pulvérisation, sur le goujon revêtu de peinture époxy.

## Revendications

1. Goujon fileté (1) d'assemblage de micropieux, **caractérisé en ce qu'**il comprend plusieurs filets (6) adjacents à hélice droite ou gauche, dont le pas est supérieur ou égal à 300.

2. Goujon selon la revendication 1, **caractérisé en ce qu'**il comprend trois filets (6) trapézoïdaux symétriques.

3. Goujon selon la revendication 2, **caractérisé en ce que** son diamètre est inférieur à 30 mm, et vaut notamment 16 et 24 mm, le pas étant de 300, 600, 900 ou 1200.

4. Goujon selon l'une quelconque des revendications 1 à 3, **caractérisé en ce qu'**il est réalisé en acier inoxydable, notamment acier austénitique 1.4404.

5. Goujon selon la revendication 4, **caractérisé en ce qu'**il est pourvu d'un revêtement anticorrosion, notamment peinture époxy appliquée à chaud.

6. Goujon selon la revendication 5, **caractérisé en ce qu'**il est pourvu en outre d'un revêtement facilitant le glissement contre les filets, notamment film de polytétrafluoréthylène.

7. Ensemble formé par un goujon tel que présenté dans l'une quelconque des revendications précédentes, et deux tronçons (3) de micropieu comprenant chacun au moins une ailette (7), **caractérisé en ce que** les tronçons (3) de micropieu comprennent chacun un taraudage (2) axial débouchant au droit d'une surface transversale d'appui (4, 5), la somme des longueurs de percement de ces taraudages (2) étant supérieure à la longueur du goujon (1).

8. Ensemble selon la revendication 7, **caractérisé en ce que** les taraudages axiaux (2) des deux tronçons (3) sont sensiblement identiques.

9. Ensemble selon la revendication 7 ou 8, **caractérisé en ce que** le percement des taraudages est de 76.5 mm, les taraudages (2) s'étendant sur 64.5 mm, la longueur totale du goujon (1) étant de 144 mm, la longueur du filetage sur le goujon étant de 120 mm, le goujon (1) saillant ainsi par rapport au plan transversal d'appui (4, 5) d'un des tronçons sur une longueur de 55.5 mm de filets lorsqu'il est vissé à fond dans le taraudage de ce tronçon.

10. Micropieu comprenant au moins un ensemble tel que présenté dans l'une quelconque des revendications 7 à 9, **caractérisé en ce que** les tronçons de ce micropieu sont réalisés en fonte d'aluminium.

## Claims

1. Threaded stud (1) for assembly of a micropile, **characterized in that** it comprises several adjacent, right or left helix threads (6) whose pitch is greater than or equal to 300.

2. Stud according to Claim 1, **characterized in that** it comprises three symmetrical trapezoidal threads (6).

3. Stud according to Claim 2, **characterized in that** its diameter is less than 30 mm and is notably between 16 and 24 mm, the pitch being 300, 600, 900 or 1200.

4. Stud according to any one of Claims 1 to 3, **characterized in that** it is made of stainless steel, notably 1.4404 austenitic steel.

5. Stud according to Claim 4, **characterized in that** it is provided with a corrosion-resistant coating, notably epoxy paint applied hot.

6. Stud according to Claim 5, **characterized in that** it is also provided with a coating facilitating sliding against the threads, notably polytetrafluoroethylene film.

7. Assembly formed by a stud as presented in any one of the preceding claims, and two micropile sections (3) each comprising at least one fin (7), **characterized in that** the micropile sections (3) each comprise an axial tapping (2) emerging level with a transverse bearing surface (4, 5), the sum of the drillhole lengths of these tappings (2) being greater than the length of the stud (1).

8. Assembly according to Claim 7, **characterized in that** the axial tappings (2) of the two sections (3) are substantially identical.

9. Assembly according to Claim 7 or 8, **characterized in that** the drillhole of the tappings is 76.5 mm, the tappings (2) extending over 64.5 mm, the total length of the stud (1) being 144 mm, the length of the thread on the stud being 120 mm, the stud (1) therefore protruding relative to the transverse bearing plane (4, 5) of one of the sections over a length of 55.5 mm of threads when it is screwed fully into the tapping of this section.

10. Micropile comprising at least one assembly as presented in any one of Claims 7 to 9, **characterized in that** the sections of this micropile are made of cast aluminium.

## Patentansprüche

1. Verbindungsgewindedübel (1) für Mikropfähle, **dadurch gekennzeichnet, dass** er mehrere benachbarte rechtsgängige oder linksgängige Gewinde (6) aufweist, deren Ganghöhe größer oder gleich 300 ist.

2. Dübel nach Anspruch 1, **dadurch gekennzeichnet, dass** er drei symmetrische Trapezgewinde (6) aufweist.

3. Dübel nach Anspruch 2, **dadurch gekennzeichnet, dass** sein Durchmesser kleiner als 30 mm ist und insbesondere einen Wert von 16 und 24 mm aufweist, wobei die Ganghöhe 300, 600, 900 oder 1200 beträgt.

4. Dübel nach einem der Ansprüche 1 bis 3, **dadurch gekennzeichnet, dass** er aus rostfreiem Stahl, insbesondere aus austenitischem Stahl 1.4404, ausgeführt ist.

5. Dübel nach Anspruch 4, **dadurch gekennzeichnet, dass** er mit einer korrosionsbeständigen Beschichtung, insbesondere heiß aufgebrachtem Epoxylack, versehen ist.

6. Dübel nach Anspruch 5, **dadurch gekennzeichnet, dass** er ferner mit einer Beschichtung, insbesondere einer dünnen Polytetrafluorethylenschicht, versehen ist, die das Gleiten gegen die Gewinde erleichtert.

7. Zusammenbau, der durch einen Dübel nach einem der vorhergehenden Ansprüche und zwei Mikropfahlabschnitte (3) gebildet ist, die jeweils mindestens einen Flügel (7) aufweisen, **dadurch gekennzeichnet, dass** die Mikropfahlabschnitte (3) jeweils ein axiales Innengewinde (2) aufweisen, das senkrecht zu einer quer liegenden Auflagefläche (4, 5) mündet, wobei die Summe der Bohrlängen dieser Innengewinde (2) größer ist als die Länge des Dübels (1).

8. Zusammenbau nach Anspruch 7, **dadurch gekennzeichnet, dass** die axialen Innengewinde (2) der zwei Abschnitte (3) im Wesentlichen identisch sind.

9. Zusammenbau nach Anspruch 7 oder 8, **dadurch gekennzeichnet, dass** die Bohrung der Innengewinde 76,5 mm beträgt, wobei die Innengewinde (2) sich über 64,5 mm erstrecken, wobei die Gesamtlänge des Dübels (1) 144 mm beträgt, wobei die Länge des Gewindes auf dem Dübel 120 mm beträgt, wobei der Dübel (1) so im Verhältnis zur quer liegenden Auflageebene (4, 5) eines der Abschnitte auf einer Länge der Gewinde von 55,5 mm vorsteht, wenn er ganz in das Innengewinde dieses Abschnitts hineingeschraubt ist.

10. Mikropfahl, der mindestens einen Zusammenbau nach einem der Ansprüche 7 bis 9 aufweist, **dadurch gekennzeichnet, dass** die Abschnitte dieses Mikropfahls aus Aluminiumguss ausgeführt sind.
